# EUROPÄISCHE PATENTANMELDUNG

(11) **EP 2 143 675 A1**
(43) Veröffentlichungstag der Anmeldung: **13.01.2010**
(21) Anmeldenummer: 08405174.7
(22) Anmeldetag: 11.07.2008
(51) Int. Cl.: B65G 61/00, B65B 63/00, B65H 67/06

(54) **Anlage zur Herstellung von Rollenpaketen und Verfahren zu ihrem Betrieb**

(71) Anmelder: Flexpack Automation S.A., 1814 La Tour-de-Peilz (CH); Nettamo, Kari, 4051 Basel (CH)
(72) Erfinder: Fuchs, Peter, 1814 La Tour de Peilz (CH)
(74) Vertreter: Kleinschmidt, Michael

(57) **Zusammenfassung**

Mehrere jeweils einer Rollenschneidemaschine (1a,b,c) zur Aufteilung einer Ausgangsrolle in Teilrollen zugeordnete Uebernahmeplätze (7a,b,c) sind jeweils über eine Förderanlage (3) mit Zweigabschnitten und einem Sammelabschnitt, in dem die Zweigabschnitte zusammenlaufen, mit Uebergabeplätzen (13, 14) an einer Stapelstation (2) verbunden. In jedem Zweigabschnitt ist nach dem Uebernahmeplatz (7a;b;c), einer Waage (8a;b;c) und einer Zentriervorrichtung (9a;b;c) eine Kennzeichungsvorrichtung (10a;b;c) vorgesehen, in der eine Teilrolle jeweils mit zwei Klebeetiketten versehen wird. Im Sammelabschnitt ist vor einer Verzweigung zu einem ersten Uebergabeplatz (13), die über eine Einpackvorrichtung (12) führt und zu einem zweiten Uebergabeplatz (14) ein Lesegerät (11) angeordnet, das eine der Klebeetiketten liest und eine Drehscheibe (5d) und einen Stapler (15) nach den entnommenen Angaben so steuert, dass die Teilrolle vom Stapler (15) schliesslich am vorgesehenen von mehreren Stapelplätzen (17) auf einer Palette (18) zwecks Herstellung eines Rollenpakets zur Verpackung und Auslieferung abgelegt wird.

## Beschreibung

### Technisches Gebiet

Die Erfindung betrifft eine Anlage zur Herstellung von Rollenpaketen gemäss dem Oberbegriff des Anspruchs 1. Solche Anlagen werden, vor allem von Produzenten von flexiblen Verpackungsmaterialen für Lebensmittel, Hygieneartikel und pharmazeutische Produkte, zur Herstellung von Teilrollen bestimmter gewünschter Abmessungen aus einer meist grossen Ausgangsrolle und zur Zusammenstellung solcher Teilrollen zu Rollenpaketen eingesetzt. Die Ausgangsrolle besteht gewöhnlich aus einem Verbundmaterial aus Kunststoffolie oder Zellulose und Metallfolie, doch können auch beliebige andere biegsame flächige Materialien verarbeitet werden.

Die Erfindung betrifft ausserdem ein Verfahren zum Betrieb einer erfindungsgemässen Anlage.

### Stand der Technik

Es sind gattungsgemässe Anlagen bekannt mit einer aus geraden Bandförderern und Drehscheiben aufgebauten Förderanlage, welche aus mehreren unabhängigen Abschnitten besteht, von denen jeder einen einzigen Uebernahmeplatz an einer Rollenschneidemaschine mit einem derselben ausschliesslich zugeordneten Uebergabeplatz an einer Stapelstation verbindet.

Solche Förderanlagen sind, vor allem, wenn sie eine grössere Zahl von Rollenschneidemaschinen umfassen, sehr umfangreich und teuer und benötigen viel Platz.

### Darstellung der Erfindung

Der Erfindung liegt die Aufgabe zu Grunde, eine gattungsgemässe Anlage vor allem insofern zu verbessern, als die Förderanlage wesentlich vereinfacht und verbilligt wird.

Diese Aufgabe wird durch die Merkmale im Kennzeichen des Anspruchs 1 gelöst. Bei erfindungsgemässen Anlagen können Teile der Förderanlage Teilrollen von mehreren Rollenschneidemaschinen transportieren, sodass sich die Grösse der Förderanlage, insbesondere die Zahl der in der Regel eingesetzten Bandförderer und Drehscheiben wesentlich reduziert. Dadurch verringert sich auch der Platzbedarf der Anlage wesentlich.

Mit dem erfindungsgemässen Verfahren kann die Anlage weitgehend oder vollständig automatisch betrieben werden.

### Kurze Beschreibung der Zeichnungen

Im folgenden wird die Erfindung anhand einer Figur, welche lediglich ein Ausführungsbeispiel darstellt, näher erläutert.

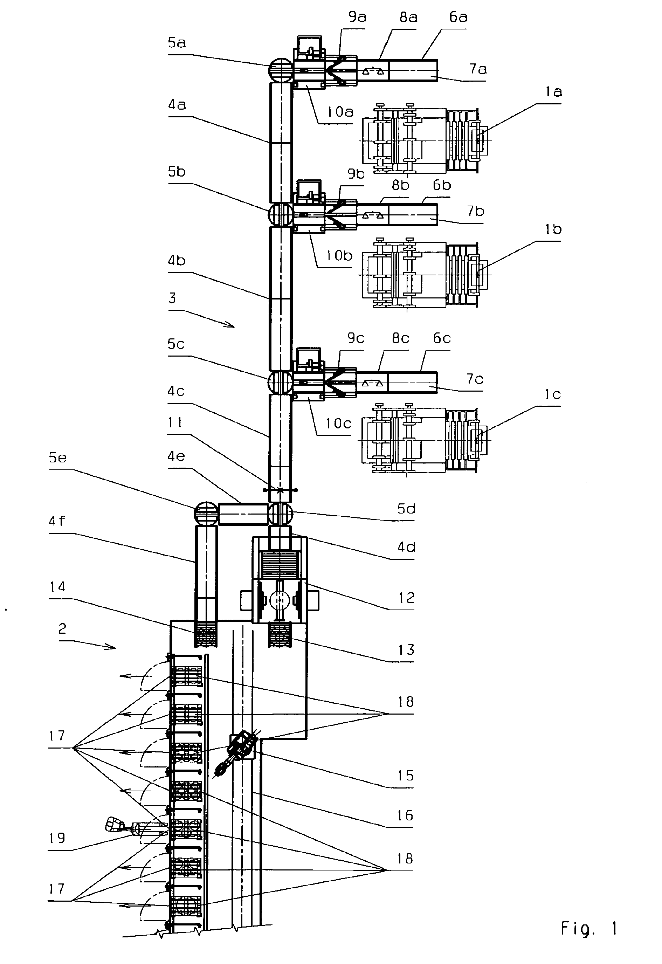

- Fig. 1: zeigt einen Grundriss einer erfindungsgemässen Anlage.

### Wege zur Ausführung der Erfindung

Die Anlage umfasst zwei oder mehr, im Beispiel eine Reihe von drei Rollenschneidemaschinen (slitter) 1a,b,c sowie eine Stapelstation 2, welche durch eine Förderanlage 3 mit den Rollenschneidemaschinen 1a,b,c verbunden ist. Die Förderanlage 3 ist im wesentlichen aus Bandförderern und Drehscheiben aufgebaut. Parallel zur Reihe der Rollenschneidemaschinen 1a,b,c läuft ein gerader Abschnitt der Förderanlage, der eine Reihe von Bandförderern 4a,b,c umfasst, die, durch Drehscheiben 5a,b,c mit anderen Teilen der Förderanlage 3 und miteinander verbunden, aufeinanderfolgen.

Von jeder der Rollenschneidemaschinen 1a,b,c geht ein Bandförderer 6a;b;c aus, der von einem neben der jeweiligen Rollenschneidemaschine 1a;b;c liegenden und ihr zugeordneten Uebernahmeplatz 7a;b;c zu einer Waage 8a;b;c führt, auf welche eine Zentriervorrichtung 9a;b;c und auf diese unmittelbar eine Kennzeichnungsstation 10a;b;c folgen, die jeweils geeignete Bandförderer umfassen. Vor der Stapelstation 2 ist eine weitere Drehscheibe 5d angeordnet, der ein Lesegerät 11, ebenfalls mit einem Bandförderer, vorgeordnet ist und an die ein weiterer kurzer Bandförderer 4d anschliesst, der zu einer Einpackvorrichtung 12 für Einzelrollen führt, welcher ein erster Uebergabeplatz 13 nachgeordnet ist. An der Drehscheibe 5d zweigt ein weiterer Bandförderer 4e ab, der über eine weitere Drehscheibe 5e und einen weiteren Bandförderer 4f an der Einpackvorrichtung 12 vorbei zu einem zweiten Uebergabeplatz 14 führt.

Der Bandförderer 6a, die Waage 8a, die Zentriervorrichtung 9a, die Kennzeichnungsstation 10a, die Drehscheibe 5a und der Bandförderer 4a bilden einen ersten Zweigabschnitt der Förderanlage 3, der an der Drehscheibe 5b mit einem zweiten Zweigabschnitt, der aus dem Bandförderer 6b, der Waage 8b, der Zentriervorrichtung 9b und der Kennzeichnungsstation 10b besteht, zusammenläuft, während an der Drehscheibe 5c ein dritter Zweigabschnitt anschliesst, der aus dem Bandförderer 6c, der Waage 8c, der Zentriervorrichtung 9c und der Kennzeichnungsstation 10c besteht. Die Bandförderer 4b-f und die Drehscheiben 5b-e bilden einen Sammelabschnitt der Förderanlage 3, der mehrere, erst zwei, dann, ab der Drehscheibe 5c, drei Zweigabschnitte derselben mit dem Lesegerät 11 und weiter mit den Uebergabeplätzen 13, 14 an der Stapelstation 2 verbindet. Jeder Zweigabschnitt mündet in den Sammelabschnitt.

Die Stapelstation 2 umfasst einen als mehrachsiger Industrieroboter mit einem Greifer ausgebildeten Stapler 15, der längs einer Bahn 16 verfahrbar ist und eine Reihe von längs derselben angeordneten Stapelplätzen 17, an denen Paletten 18 zur Aufnahme von Teilrollen angeordnet sind, welche mittels eines Gabelstaplers 19 abtransportiert werden können. In der Reichweite des Staplers 15 liegen sowohl die Uebergabeplätze 13, 14 als auch die Paletten 18.

In jeder der Rollenschneidemaschinen 1a,b,c wird jeweils eine Bahn von einer Ausgangsrolle abgewickelt, in mehrere schmälere Teilbahnen geschnitten und dieselben zu Teilrollen aufgewickelt. Die Ausgangsrolle kann etwa aus einem Verbundmaterial aus einer Kunststoffolie und einer Metallfolie bestehen und eine Länge von zwischen 200mm und 800mm und einen Durchmesser von zwischen 150mm und 800mm aufweisen. Nach Beendigung der Verarbeitung einer Ausgangsrolle z.B. in der Rollenschneidemaschine 1a werden die Teilrollen manuell verklebt, damit sie sich nicht abwickeln können und manuell oder - vorzugsweise - automatisch, nacheinander auf den der Rollenschneidemaschine 1a zugeordneten Uebernahmeplatz 7a gelegt.

Vom Bandförderer 6a wird die einzelne Teilrolle dann zur Waage 8a befördert, wo sie gewogen wird und dann, nach Zentrierung in der Zentrierstation 9a, zur Kennzeichnungsstation 10a, wo sie mit zwei vorzugsweise gleichen Klebeetiketten versehen wird, von denen eine gut geschützt auf die Innenseite des Rollenkerns und eine leicht lesbar auf die Aussenseite der Teilrolle geklebt wird. Die Klebeetiketten tragen jeweils eine Kennung, die alle für die spätere Zuordnung zu einem der Stapelplätze 17 und ihre Anordnung auf demselben erforderlichen Angaben wie Auftrags-, Kunden und Rollennummer, aus der sich auch Dimensionen, Gewicht und Packbild ergeben und eventuell weitere vom Kunden gewünschte Angaben enthält und die z.B. als Strichcode aufgedruckt ist. Anschliessend wird die Teilrolle weiter über die Drehscheibe 5a auf den Sammelabschnitt geführt, wo sie über die Drehscheibe 5b, den Bandförderer 4b, die Drehscheibe 5c und den Bandförderer 4c zum Lesegerät 11 transportiert wird. Dort wird die aussen angebrachte Klebetikette gelesen und je nach dem Ergebnis die Teilrolle an der Drehscheibe 4d auf den Bandförderer 4d geleitet, der sie der Einpackvorrichtung 12 zuführt, wo sie automatisch in Kunststoffolie verpackt und von wo sie dann weiter auf den Uebergabeplatz 13 gefördert wird oder auf den Bandförderer 4e, sodass sie über die Drehscheibe 5e und den Bandförderer 4f unverpackt auf den Uebergabeplatz 14 gelangt.

Die dem Klebeetikett entnommenen Angaben werden auch an einen Rechner weitergeleitet, der den Stapler 15 so steuert, dass er die Teilrolle am entsprechenden Uebergabeplatz 13 oder 14 aufnimmt und dem vorgesehenen Stapelplatz 17 zuführt und dort an der dem beabsichtigten Packbild entsprechenden Stelle auf der Palette 18 ablegt. Wegen der Kennung auf dem Klebeetikett können also die Teilrollen, die zuerst sequentiell über den entsprechenden Zweigabschnitt gefördert werden, auf dem Sammelabschnitt, in den sukzessive alle Zweigabschnitte münden, ebenfalls sequentiell, aber im übrigen chaotisch gefördert werden, da sie schliesslich durch die Lesestation 11 wieder identifiziert und zugeordnet werden.

So wird jede Teilrolle an ihren Platz gebracht. Sobald auf einer Palette 18 alle Teilrollen beisammen sind, die für ein bestimmtes zur Auslieferung an einen Kunden bestimmtes Rollenpaket vorgesehen sind, wird sie vom Gabelstapler 19 abtransportiert und zu einer Verpackungsanlage gebracht, wo das Rollenpaket verpackt und so für den Transport fertiggestellt wird. Das Verfahren kann weitgehend oder so gut wie vollständig automatisch durchgeführt werden, was aus hygienischen Gründen erwünscht ist und auch, weil es in den meisten Fällen bei Fehlern eine Rückverfolgung bis zur Ursache ermöglicht.

Es sind beträchtliche Abweichungen von der beschriebenen Ausführung der Anlage möglich, ohne dass der Rahmen der Erfindung verlassen würde. So kann der Gesamtaufbau anders sein, es können an jeder Rollenschneidemaschine mehrere Uebernahmeplätze vorhanden sein, die Kennzeichnungsstationen können statt Klebeetiketten Transponder anbringen, die dann von einer entsprechenden Lesestation ausgelesen werden usw.. Es ist auch nicht ausgeschlossen, dass etwa ein Uebernahmeplatz direkt, also nicht über den Sammelabschnitt, mit einem Uebergabeplatz verbunden ist, doch ist es in der Regel vorzuziehen, dass die Verbindung eines Uebernahmeplatzes mit dem mindestens einen Uebergabeplatz jeweils einen das Lesegerät umfassenden Teil des Sammelabschnitts einschliesst.

### Bezugszeichenliste

- 1a-c: Rollenschneidemaschinen
- 2: Stapelstation
- 3: Förderanlage
- 4a-f: Bandförderer
- 5a-e: Drehscheiben
- 6a-c: Bandförderer
- 7a-c: Uebernahmeplätze
- 8a-c: Waagen
- 9a-c: Zentriervorrichtungen
- 10a-c: Kennzeichnungsstationen
- 11: Lesegerät
- 12: Einpackvorrichtung
- 13, 14: Uebergabeplätze
- 15: Stapler
- 16: Bahn
- 17: Stapelplatz
- 18: Palette
- 19: Gabelstapler

## Patentansprüche

1. Anlage zur Herstellung von Rollenpaketen, mit mehreren Rollenschneidemaschinen (1a, 1b, 1c), welche jeweils geeignet sind, eine Bahn von einer Ausgangsrolle abzuwickeln, in mehrere Teilbahnen zu zerschneiden und jede derselben zu einer Teilrolle aufzuwickeln, mit einer Stapelstation (2) mit mindestens einem Stapler (15) sowie mehreren Stapelplätzen (17), an denen jeweils zur Herstellung eines Rollenpakets eine Anordnung von Rollen bestimmter Eigenschaften aus Teilrollen zusammengestellt wird, sowie mit einer Förderanlage (3), welche jeweils zur sequentiellen Beförderung von Teilrollen geeignete Abschnitte umfasst und mehrere Uebernahmeplätze (7a, 7b, 7c) zur Uebernahme von Teilrollen an den Rollenschneidemaschinen (1a; 1b; 1c) mit mindestens einem Uebergabeplatz (13, 14) zur Uebergabe von Teilrollen an der Stapelstation (2) verbindet, derart, dass von jedem Uebernahmeplatz (7a, 7b, 7c) ein Zweigabschnitt der Förderanlage (3) ausgeht, **dadurch gekennzeichnet, dass** die Förderanlage (3) einen Sammelabschnitt umfasst, welcher mehrere Zweigabschnitte mit mindestens einem Uebergabeplatz (13, 14) verbindet und in jedem der Zweigabschnitte eine Kennzeichnungsstation (10a, 10b, 10c) vorgesehen ist, welche geeignet ist, jede über den Zweigabschnitt beförderte Teilrolle mit einer Kennung zu versehen, welche Angaben zu allen für die Zuordnung der Teilrolle zu einem bestimmten Stapelplatz (17) massgeblichen Eigenschaften enthält, während im Sammelabschnitt vor dem mindestens einen Uebergabeplatz (13, 14) ein Lesegerät (11) angeordnet ist, welches geeignet ist, jeder Kennung die besagten Angaben zu entnehmen.

2. Anlage nach Anspruch 1, **dadurch gekennzeichnet, dass** ein Teil der Förderanlage (3), der einen Uebernahmeplatz (7a, 7b, 7c) mit dem mindestens einen Uebergabeplatz (13, 14) verbindet, jeweils einen das Lesegerät (11) enthaltenden Teil des Sammelabschnitts umfasst.

3. Anlage nach Anspruch 2, **dadurch gekennzeichnet, dass** der Kennzeichnungsstation (10a, 10b, 10c) jeweils eine Waage (8a; 8b; 8c) vorgeordnet ist.

4. Anlage nach einem der Ansprüche 1 bis 3, **dadurch gekennzeichnet, dass** der Kennzeichnungsstation (10a, 10b, 10c) jeweils eine Zentriervorrichtung (9a; 9b; 9c) vorgeordnet ist.

5. Anlage nach einem der Ansprüche 1 bis 5, **dadurch gekennzeichnet, dass** die Förderanlage (3) eine Einpackvorrichtung (12) für Teilrollen umfasst.

6. Anlage nach Anspruch 5, **dadurch gekennzeichnet, dass** die Einpackvorrichtung (12) einem ersten Uebergabeplatz (13) unmittelbar vorgeordnet ist, derart, dass jeder Uebernahmeplatz (7a, 7b, 7c) nur über die Einpackvorrichtung (12) mit dem ersten Uebergabeplatz (13) verbunden ist.

7. Anlage nach Anspruch 5 oder 6, **dadurch gekennzeichnet, dass** die Förderanlage (3) mindestens einen zweiten Uebergabeplatz (14) aufweist, mit welchem jeder Uebernahmeplatz (7a, 7b, 7c) über die Einpackvorrichtung (12) nicht berührende Teile der Förderanlage (3) verbunden ist.

8. Anlage nach einem der Ansprüche 1 bis 7, **dadurch gekennzeichnet, dass** die Förderanlage (3) gerade Bandförderer (4a, 4b, 4c, 4d, 4e, 4f, 6a, 6b, 6c) und Drehscheiben (5a, 5b, 5c, 5d, 5e) umfasst.

9. Anlage nach einem der Ansprüche 1 bis 8, **dadurch gekennzeichnet, dass** in der Stapelstation (2) die Stapelplätze (17) mindestens eine Reihe bilden und der Stapler (15) über eine längs der mindestens einen Reihe verlaufende Bahn (16) verfahrbar ist.

10. Anlage nach einem der Ansprüche 1 bis 9, **dadurch gekennzeichnet, dass** der Stapler (15) als mehrachsiger Industrieroboter ausgebildet ist.

11. Verfahren zum Betrieb einer Anlage nach einem der Ansprüche 1 bis 10, **dadurch gekennzeichnet, dass** jede Teilrolle an einer Kennzeichnungsstation (10a, 10b, 10c) mit einer Kennung versehen wird, die Angaben zu allen für die Zuordnung der Teilrolle zu einem bestimmten Stapelplatz (17) massgeblichen Eigenschaften enthält und dass die Kennung an der Stapelstation (2) vom Lesegerät (11) gelesen und die Teilrolle entsprechend den aus den Angaben auf der Kennung entnehmbaren Eigenschaften vom Stapler (15) an den bestimmten Stapelplatz (17) gebracht und dort abgelegt wird.
